# FASCICULE DE BREVET EUROPEEN

(11) **EP 2 359 094 B1**
(45) Date de publication et mention de la délivrance du brevet: **29.05.2013**
(21) Numéro de dépôt: 09775128.3
(22) Date de dépôt: 17.11.2009
(51) Int. Cl.: G01C 21/34, G06Q 10/00

(54) **PROCÉDÉ POUR LA MISE EN PLACE D'UNE SÉQUENCE DE DONNÉES PERMETTANT LA GÉNÉRATION D'UN VOYAGE**
VERFAHREN ZUM HERSTELLEN EINER DATENSEQUENZ, DIE ZUM ERZEUGEN EINER REISE VERWENDET WERDEN KANN
METHOD FOR ESTABLISHING A DATA SEQUENCE THAT CAN BE USED TO GENERATE A TRIP

(30) Priorité: 17.11.2008 BE 200800625
(43) Date de publication de la demande: 24.08.2011
(73) Titulaire: NATURAL DIGIT, 7000 Mons (BE)
(72) Inventeur: GODART, Jean-Marc, B-7000 Mons (BE)
(74) Mandataire: Quintelier, Claude
(86) Numéro de dépôt international: PCT/EP2009/065342
(87) Numéro de publication internationale: WO 2010/055173

(56) Documents cités:
- US-A1- 2007 106 468

## Description

La présente invention concerne un procédé pour la mise en place à l'aide d'un ordinateur d'une séquence de données permettant la génération d'un voyage, lequel procédé comporte l'usage d'une première table dans laquelle est stocké un premier ensemble de N données, chaque donnée (POIᵢ; 1 ≤ i ≤ N) identifiant un point d'intérêt pouvant faire partie de voyages, lequel procédé comporte également la réception de données d'utilisateur introduites par un utilisateur et qui se rapportent audit voyage à mettre en place.

Un tel procédé est connu de l'article de Jean-Marc Godart intitulé «Combinatorial optimisation, based decision support system for trip planning» et publié dans International conference on information and communication technologies in tourism, Innsbruck 1999, Springer Verlag Austria 1999, pages 318-327. Suivant le procédé connu l'utilisateur introduit des données d'utilisateur se rapportant au voyage qu'il envisage de faire. Ces données d'utilisateur ainsi que les données stockées dans la première table sont utilisées pour composer un voyage. Une autre méthode de calcul d'un intinéraire passant par des points d'intérêt corrélés à des données d'utilisateur est décrite dans le document US 2007/106467A1.

Un inconvénient du procédé connu est qu'il n'est pas évident de produire de façon efficace un voyage à partir de ce premier ensemble de données.

L'invention a pour but de réaliser un procédé pour la mise en place à l'aide d'un ordinateur d'une séquence de données permettant la génération d'un voyage, lequel procédé permet de structurer les données de façon à obtenir un traitement rapide du procédé n'entraînant pas une longue attente pour l'utilisateur.

A cette fin un procédé suivant l'invention est caractérisé en ce que les données d'utilisateur sont corrélées aux points d'intérêt afin de prélever dans la première table un premier sous-ensemble de F (F ≤ N) données identifiant des points d'intérêt corrélées aux données d'utilisateur, et en ce qu'à chaque donnée (POIᵢ) dudit premier ensemble de données est associé un premier identificateur (Lp ; 1 ≤ p ≤ P ; P ≤ N) identifiant un lieu géographique où est situé le point d'intérêt identifié par la donnée (POIᵢ), lequel procédé comporte également l'usage d'une base de données indiquant entre chaque fois un premier couple ((Lᵣ,Lⱼ) ; 1 ≤ r ≤ P ; 1 ≤ j ≤ P) de lieux géographiques une distance (Δdᵣⱼ) et une durée (Δtᵣⱼ) pour se rendre du lieu géographique Lᵣ au lieu géographique Lⱼ, lequel usage de la base de données est réalisé en formant à partir du premier sous-ensemble de F données un deuxième sous-ensemble de G (G ≤ F ; G ≤ P) premiers identificateurs reprenant les premiers identificateurs associés aux données reprises dans le premier sous-ensemble, et en formant chaque fois un deuxième couple ((Lₚ)ₖ, (Lₚ)ₘ ; 1 ≤ k ≤ G ; 1 ≤ m ≤ G) de premiers identificateurs à l'aide des premiers identificateurs repris dans le deuxième sous-ensemble, lesquels couples ((Lₚ)ₖ, (Lₚ)ₘ) de premiers identificateurs étant alors utilisés pour prélever dans la base de données chaque fois la distance (Δ(dₚ)ₖₘ) et la durée (Δ(tₚ)ₖₘ) pour se rendre du lieu géographique (Lₚ)ₖ au lieu géographique (Lₚ)ₘ, une première matrice GxG étant construite en mettant en chaque endroit (k,m) la distance (Δ(dₚ)ₖₘ) et la durée (Δ(tₚ)ₖₘ) prélevées dans la base de données, les données du premier sous-ensemble de données étant ensuite utilisées pour former des troisièmes couples de données (POIₚ)_{q}, (POIₚ)ₛ (1 ≤ q ≤ F ; 1 ≤ s ≤ F) et pour former une deuxième matrice FxF en prélevant dans la première matrice pour chaque couple de données (POIₚ)_{q}, (POIₚ)ₛ à l'aide de leur premier identificateur ((Lₚ)ₖ, (Lₚ)ₘ) associé chaque fois à la donnée (POIₚ)_{q}, (POIₚ)ₛ la distance (Δ(dₚ)ₖₘ) et la durée (Δ(tₚ)ₖₘ) et en mettant en chaque endroit (q,s) la distance (Δ(dₚ)ₖₘ) et la durée (Δ(tₚ)ₖₘ) prélevées dans la première matrice, ladite séquence de données étant ensuite construite à l'aide de la distance (Δ(dₚ)ₖₘ) et la durée (Δ(tₚ)ₖₘ) présentes dans la deuxième matrice FxF pour chacun des couples (POIₚ)_{q}, (POIₚ)ₛ. En associant à chaque donnée un premier identificateur on parvient à établir un lien entre le point d'intérêt et le lieu géographique où se trouve ce point d'intérêt. Comme, de plus, différents points d'intérêt peuvent se trouver au même endroit, l'usage des premiers identificateurs permet de limiter le nombre d'éléments à traiter ultérieurement. L'usage de la base de données permet de stocker les distances et les durées de façon efficace, puisqu'elles sont stockées en faisant usage d'une structure basée sur les premiers identificateurs. En n'utilisant que les premiers identificateurs faisant partie du deuxième sous-ensemble pour accéder à la base de données lors de la formation du voyage le temps pour exécuter le procédé est considérablement réduit, ce qui contribue sensiblement à l'efficacité du procédé. A partir de la première matrice, la deuxième matrice peut rapidement être formée, ce qui permet de revenir à ces points d'intérêt sélectionnés sur base des données utilisateur et donc de former la séquence de données pour générer le voyage.

Une première forme de réalisation préférentielle d'un procédé suivant l'invention est caractérisée en ce que chaque premier identificateur (Lp) est formé par une valeur numérique distincte (LocIDₚ), à chacun des premiers identificateurs (Lp) une valeur d'index (index-w) est associée, laquelle valeur d'index indique la position de chaque premier identificateur dans un rangement des premiers identificateurs réalisé sur base de ladite valeur numérique, ladite base de données comprend une troisième matrice qui est structurée et adressée à l'aide de cette valeur d'index et qui contient la distance et la durée de chacun des premiers couples. Ainsi la base de données peut être adressée à l'aide des valeurs d'index, ce qui permet une gestion plus structurée et donc plus rapide.

Une deuxième forme de réalisation préférentielle d'un procédé suivant l'invention est caractérisée en ce que sur base des valeurs numériques formant les premiers identificateurs un deuxième identificateur (MaxLocID) est formé indiquant la valeur numérique la plus élevée attribuée à un premier identificateur, une deuxième table comprenant un nombre d'emplacements au moins égal à la valeur numérique dudit deuxième identificateur étant ensuite formée, l'ensemble des premiers identificateurs étant ensuite parcouru et pour chacun des premiers identificateurs il est mis à l'endroit dont la position dans la deuxième table correspond à la valeur numérique attribuée au premier identificateur considéré une valeur prédéterminée, le nombre d'endroits dans la deuxième table où une telle valeur prédéterminée est reprise étant ensuite compté pour former un troisième identificateur (NumL). Ceci permet de structurer l'ensemble des premiers identificateurs.

Une troisième forme de réalisation préférentielle d'un procédé suivant l'invention est caractérisée en ce qu'une troisième table est formée dont le nombre d'emplacements correspond au nombre indiqué par le troisième identificateur, ladite valeur d'index (index-w) étant associée aux premiers identificateurs en plaçant les premiers identificateurs dans la troisième table suivant l'ordre dans lequel ils sont repris dans la deuxième table, la valeur d'index attribuée correspondant à l'ordre de succession suivant lequel les premiers identificateurs sont repris dans la troisième table. Ceci permet d'attribuer par une simple logique les valeurs d'index.

Une quatrième forme de réalisation préférentielle d'un procédé suivant l'invention est caractérisée en ce pour le deuxième sous-ensemble ladite valeur d'index est également reprise dans ce deuxième sous-ensemble, et en ce que lesdits deuxièmes couples sont formés par les valeurs d'index attribuées aux premiers identificateurs formant lesdits deuxièmes couples. Ainsi il devient possible d'adresser la base de données à l'aide de la valeur d'index également pour les premiers identificateurs repris dans le deuxième sous-ensemble.

Une cinquième forme de réalisation préférentielle d'un procédé suivant l'invention est caractérisée en ce qu'une quatrième table ayant un nombre d'emplacements égal au deuxième identificateur est formée, chacun des premiers identificateurs repris dans le deuxième sous-ensemble étant ensuite repris dans la quatrième table à l'emplacement dont la position correspond à la valeur numérique attribuée au premier indicateur considéré, lesdits premiers identificateurs repris dans la quatrième table étant ensuite substitués par leur valeur d'index. Ceci permet de logiquement grouper les premiers identificateurs du deuxième sous-ensemble.

Une sixième forme de réalisation préférentielle d'un procédé suivant l'invention est caractérisée en ce que la base de données comporte un troisième ensemble comprenant des premiers facteurs d'adaptation permettant d'introduire dans ladite séquence une adaptation en fonction du moyen de locomotion utilisé pour parcourir ladite distance. Ainsi la séquence de voyage peut être modulée en fonction du moyen de locomotion utilisé pour parcourir ladite distance.

L'invention sera maintenant décrite plus en détails à l'aide des dessins qui illustrent une forme préférentielle d'un procédé suivant l'invention. Dans les dessins :
la Figure 1 illustre les différentes phases de construction de la base de données ;
la Figure 2 illustre les différentes phases de construction de la deuxième matrice utilisée pour évaluer la séquence de données ; et

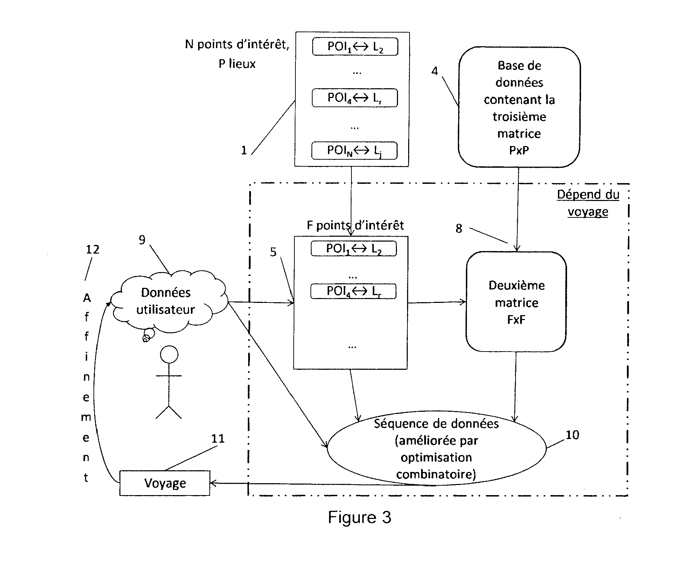

la Figure 3 illustre les différentes étapes du procédé suivant l'invention.

Dans les dessins une même référence a été attribuée à un même élément ou à un élément analogue.

Planifier le voyage d'un touriste ou d'un utilisateur consiste à sélectionner et combiner, dans un voyage, les produits touristiques les plus appropriés en prenant en compte les centres d'intérêts, les desiderata et les contraintes du touriste. A titre illustratif, envisageons différents produits touristiques, à savoir les logements (hôtels, chambres d'hôtes, camping, ...) et les activités (musées, parcs d'attractions, randonnées, ...). Ainsi, un voyage sera entre autre composé d'un point d'origine, d'activités, de logements et d'un point de destination. Ces différents types d'éléments seront désignés par le terme points d'intérêt (POI). Bien entendu, les trajets entre les points d'intérêt composant un voyage sont également gérés dans le procédé suivant l'invention. Il va de soi que l'invention n'est pas limitée aux points d'intérêt cités en tant qu'exemple, et que bien entendu d'autres formes de réalisation peuvent être envisagées.

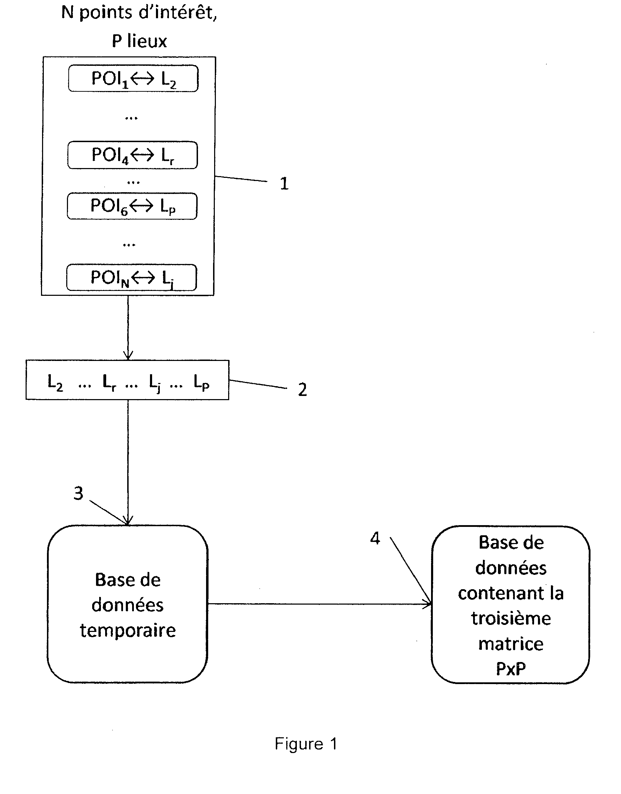

Pour produire un voyage le procédé suivant l'invention fait appel à une base de données dont la structure sera décrite à l'aide de la Figure 1. Comme décrit au préalable la génération d'un voyage nécessite des points d'intérêt (POI) pouvant faire partie du voyage. Il est donc nécessaire de grouper et de mémoriser ces points d'intérêt. A cette fin le procédé suivant l'invention fait appel à une première table 1 dans laquelle est stockée un premier ensemble de N données (POIᵢ), chaque donnée (POIᵢ ; 1 ≤ i ≤ N) identifiant un point d'intérêt. Chaque point d'intérêt est lié à un lieu géographique indiquant où il est situé géographiquement. La localisation d'un point d'intérêt est, par exemple, défini par sa longitude et sa latitude. Cette information concernant le lieu géographique est nécessaire pour construire le voyage afin de pouvoir prendre en compte le déplacement d'un point d'intérêt POIₓ vers un autre point d'intérêt POI_{y}. A cette fin il est associé à chaque donnée (POIᵢ) dudit premier ensemble de données un premier identificateur (Lₚ ; 1 ≤ p ≤ P ; P ≤ N) identifiant le lieu géographique où est situé le point d'intérêt identifié par la donnée (POIᵢ). Que P ≤ N s'explique par le fait qu'en un même lieu géographique Lp il peut y avoir plus d'un point d'intérêt. Ainsi par exemple dans un parc d'attraction situé au lieu géographique L₅ on peut avoir un hôtel POI₃, un théâtre POI₉ et une attraction POI₁₁. Après avoir attribué à chaque lieu géographique un premier identificateur on obtient un deuxième ensemble de P premiers identificateurs.

Suivant l'invention les informations relatives aux trajets lors d'un voyage sont calculées à partir d'une base de données 4 de trajets structurés de façon adaptée et généralement gigantesque qui peut par exemple prendre la forme d'un ou plusieurs fichiers informatiques à accès direct. Cette base de données structurée contient les distances Δd et durées Δt de trajet pour l'ensemble des trajets possibles entre tous les couples de lieux géographiques 2 se trouvant dans la première table des points d'intérêt. Il faut noter qu'ici ce sont des informations relatives aux trajets entre deux lieux géographiques, et non entre deux points d'intérêt. La base de données 4 est construite en indiquant entre chaque fois un premier couple ((Lᵣ,Lⱼ) ; 1 ≤ r ≤ P ; 1 ≤ j ≤ P) de lieux géographiques du deuxième sous-ensemble une distance (Δdᵣⱼ) et une durée (Δtᵣⱼ) pour se rendre du lieu géographique Lᵣ au lieu géographique Lⱼ.

Pour toutefois permettre un accès facile à cette base de données il est important de mettre une structure logique dans la façon d'y stocker la distance et la durée pour chacun des premiers couples. Cette technique permet évidemment de réduire les dimensions de la base de données des trajets. Le volume requis pour ces données reste cependant important et nécessite une grande place mémoire. De plus, seulement une petite partie de ces données sera réellement utilisée lors de la construction d'un voyage demandé par l'utilisateur. Il faut toutefois souligner que plusieurs bases de données des trajets pourraient être utilisées simultanément, par exemple pour différents pays ou régions, afin de limiter la taille de chacune d'entre-elles.

Le premier identificateur est par exemple chaque fois formé par une valeur numérique distincte (LocID). Cette valeur numérique distincte est de préférence une valeur positive. L'ensemble de ces lieux géographiques constitue le deuxième ensemble de P (P ≤ N) lieux géographiques. Pour chaque premier couple de premiers identificateurs ((Lᵣ,Lⱼ) ; 1 ≤ r ≤ P, 1 ≤ j ≤ P ), la distance et la durée d'un trajet entre ce couple de localisations sont alors calculées.

Pour des raisons de clarté, il a été choisi de calculer un seul trajet pour chaque couple de premiers identificateurs. Ceci n'est bien évidemment pas restrictif et moyennant quelques modifications plusieurs trajets (ou aucun trajet) entre un couple de premiers identificateurs (Lᵣ,Lⱼ) pourraient être envisagés, comme par exemple pas de moyen d'accès de Lᵣ vers Lⱼ, trajet le plus court et trajet le plus rapide de Lᵣ vers Lⱼ,, etc. La base de données peut le cas échéant comporter pour un nombre prédéterminé de points d'intérêt un coefficient d'évaluation permettant d'évaluer l'intérêt du point d'intérêt considéré. Ces coefficients d'évaluation peuvent être un coût et/ou une mesure d'attractivité associée au point d'intérêt considéré. Si par exemple le point d'intérêt concerne une attraction le coût sera le prix d'entrée, si le point d'intérêt concerne un logement le coût sera le tarif par nuit. Ce coefficient d'intérêt sera pris en considération lors de la génération de la séquence servant à produire le voyage. Une adaptation de la séquence en fonction du moyen de locomotion (voiture, avion, train, etc..) utilisé pour parcourir ladite distance est également possible.

La base de données temporaire 3 contient donc les informations de distance (Δdᵣⱼ) et de durée (Δtᵣⱼ) pour se rendre du lieu géographique Lᵣ au lieu géographique Lⱼ. Cette base de données des distances et de durées des trajets peut par exemple prendre la forme d'un fichier informatique. La structure de ce fichier est la suivante :

| | | | |
|---|---|---|---|
| L₁ [T] | L₂ [T] | Δd(1,2) [T] | Δt(1,2) [LB] |
| L₁ [T] | L₃ [T] | Δd(1,3) [T] | Δt(1,3) [LB] |
| L₁ [T] | L₄ [T] | Δd(1,4) [T] | Δt(1,4) [LB] |

... et ainsi de suite pour tous les trajets du L₁ vers tous les autres L,

| | | | |
|---|---|---|---|
| L₂ [T] | L*₁* [T] | Δd(2,1) [T] | Δt(2,1) [LB] |
| L₂ [T] | L₃ [T] | Δd(2,3) [T] | Δt(2,3) [LB] |
| L₂ [T] | L*₄* [T] | Δd(2,4) [T] | Δt(2,4) [LB] |

... et ainsi de suite pour tous les trajets du L₂ vers tous les autres L, ainsi que pour toutes les combinaisons de L.

Dans l'exemple ci-dessus, [T] symbolise une tabulation, [LB] le retour à la ligne, Δd(r,j) la distance du lieu géographique Lᵣ au lieu géographique Lⱼ et Δt(r,j) la durée pour se déplacer du lieu géographique Lᵣ au lieu géographique Lⱼ. Il faut noter que l'ordre des lignes dans ce fichier n'a pas d'importance.

Pour construire la base de données temporaire on calcule pour chaque couple de points d'intérêt la distance (Δd) et la durée (Δt) de trajet entre leur lieu géographique respectif. Pour ce faire il a été choisi d'utiliser par exemple un outil commercial spécifique, proposé par la société GeoSolutions (Opti-Time), pour le transport par route (voiture, marche, vélo, etc.). Toutefois d'autres outils pourraient parfaitement être utilisés pour ce faire. En particulier, tout outil qui inclut une base de données routière (type TeleAtlas ou NavTech) et un algorithme de plus court chemin (bien connus) peut se substituer à celui retenu. On peut aussi y substituer le calcul d'une distance et d'une durée de trajet approximatives, par exemple calculées "à vol d'oiseau".

A partir de cette structure de données des trajets temporaire, la base de données des trajets dans un format structuré 4 sera construite. Cette base de données structurée contiendra les éléments suivants :
- un deuxième identificateur appelé MaxLocID et dont la valeur numérique est égale à la valeur numérique maximale, c'est-à-dire celle qui est la valeur numérique (LocIDₚ) la plus élevée attribuée à un premier identificateur présent dans le deuxième ensemble;
- un troisième identificateur appelé NumL et dont la valeur numérique est égale à P, qui indique le nombre total de premiers identificateurs utilisés présents dans la base de données en construction;
- une valeur d'index (index-w), qui indexe les premiers identificateurs présents dans la base de données en construction;
- une troisième matrice PxP qui contient les distances et durées des trajets entre les premiers identificateurs pris deux à deux présents dans la base de données temporaire.

Pour former ce deuxième et troisième identificateurs la base de données temporaire, à savoir le fichier informatique, est parcourue une première fois afin de vérifier la cohérence des données, c'est-à-dire que chacune des valeurs numériques (LocID) attribuées aux premiers identificateurs soient positives et que les distances et durées soient cohérentes. Le deuxième identificateur (MaxLocID) est déterminé en recherchant parmi les premiers identificateurs celui qui possède la plus grande valeur numérique. Cette plus grande valeur numérique est ensuite mémorisée.

L'étape suivante est la détermination du troisième identificateur (NumL), qui est déterminé en comptant dans le deuxième ensemble le nombre de premiers identificateurs différents effectivement présents dans la base de données temporaire. En effet, si par exemple le deuxième identificateur vaut MaxLocID= 7, il se peut très bien que certaines valeurs numériques n'aient pas été utilisées pour les premiers identificateurs. Ainsi, par exemple, il se pourrait qu'il n'y ait aucun premier identificateur ayant la valeur numérique L=3. Il serait alors inutile de stocker des données concernant ce premier identificateur L=3.

Pour calculer le troisième identificateur (NumL), une deuxième table comprenant un nombre d'emplacement au moins égal à la valeur numérique dudit deuxième identificateur est formée. Les emplacements étant numérotés en ordre croissant. La base de données temporaire 3 est ensuite parcourue et pour chacun des premiers identificateurs présents dans cette base de données temporaire il est mis à l'emplacement dont la position dans la deuxième table correspond à la valeur numérique attribuée au premier identificateur considéré une valeur prédéterminée. Ceci est par exemple réalisé en stockant lors de la formation de la deuxième table, une valeur initiale (par exemple 0) dans chacun des emplacements de la deuxième table. Lors du prochain parcours de la base de données temporaire, lorsqu'un trajet allant du premier identificateur Lᵣ vers le premier identificateur Lⱼ est lu, une valeur numérique prédéterminée (par exemple 1) est inscrite dans ces emplacements de la deuxième table dont les numéros d'ordre correspondent aux valeurs numériques attribuées aux premiers identificateurs Lᵣ et Lⱼ. Le nombre d'endroits dans la deuxième table où une telle valeur prédéterminée (1) est reprise étant ensuite compté pour former le troisième identificateur (NumL). Ce troisième identificateur sera de préférence stockée dans la base de données.

Par exemple, si MaxLocID = 7 et si les valeurs numériques des premiers identificateurs présents dans la base de données temporaire sont 1, 4, 5, 6 et 7, alors la deuxième table aura sept emplacements tous initialisés à la valeur 0 comme repris dans l'exemple ci-dessous :

| | | | | | | |
|---|---|---|---|---|---|---|
| 0 | 0 | 0 | 0 | 0 | 0 | 0 |
| *1* | *2* | *3* | *4* | *5* | *6* | *7* |

Puisque les valeurs numériques 2 et 3 ne sont pas présentes dans l'exemple considéré, le parcours de la base de données temporaire donnera ensuite :

| | | | | | | |
|---|---|---|---|---|---|---|
| 1 | 0 | 0 | 1 | 1 | 1 | 1 |
| *1* | *2* | *3* | *4* | *5* | *6* | *7* |

Compter le nombre d'emplacements dans la deuxième table contenant la valeur numérique prédéterminée 1 fournit la valeur P= NumL du troisième identificateur. Dans l'exemple, P=5.

Une valeur d'index (index-w) sera associée aux premiers identificateurs présents dans la deuxième table, laquelle valeur d'index indique la position de chaque premier identificateur dans un rangement des premiers identificateurs réalisé sur base de ladite valeur numérique, en particulier l'ordre de rangement dans la troisième table sera utilisé à cette fin. La valeur d'index du premier identificateur sera la place ou la position qu'il occupe dans le rangement des premiers identificateurs présents dans le fichier informatique. Pour créer cette valeur d'index, la troisième table sera formée comprenant P emplacements, les emplacements de la troisième table étant numérotés en ordre croissant. Le nombre d'emplacements de la troisième table correspond au nombre indiqué par le troisième identificateur NumL. Ladite valeur d'index (index-w) étant associée aux premiers identificateurs en plaçant les premiers identificateurs dans la troisième table suivant l'ordre dans lequel ils sont repris dans la deuxième table, la valeur d'index attribuée correspondant à l'ordre de succession suivant lequel les premiers identificateurs sont repris dans la troisième table. La troisième table sera de préférence intégrée dans la base de données.

Pour chacun (p ; 1 ≤ p ≤ P) des emplacements de la troisième table, le numéro d'ordre correspondant à la p-ième valeur numérique prédéterminée présente dans la deuxième table est inscrit à l'emplacement p dans la troisième table. Dans l'exemple décrit ci-dessus, la troisième table est :

| | | | | |
|---|---|---|---|---|
| 1 | 4 | 5 | 6 | 7 |
| *1* | *2* | *3* | *4* | *5* |

et, ainsi par exemple, le premier identificateur dont l'index est 4 vaut 6.

Une troisième matrice PxP est ensuite construite en mettant en chaque endroit (r,j) la distance (Δdᵣⱼ) et la durée (Δtᵣⱼ), prélevées dans la base de données temporaire, pour se rendre du lieu géographique Lᵣ au lieu géographique Lⱼ, c'est-à-dire pour se rendre du lieu géographique d'index r au lieu géographique d'index j. Par exemple, l'endroit (3,5) de cette troisième matrice contient la distance et la durée pour se rendre du lieu géographique identifié par la valeur numérique 5 = valeur du troisième emplacement de la troisième table) au lieu géographique identifié par la valeur numérique 7 (= valeur du cinquième emplacement de la troisième table).

Une vérification de la consistance des données est effectuée lors de la phase de construction de cette troisième matrice ; c'est-à-dire une vérification qu'il n'existe pas deux trajets concernant un même couple de lieux géographiques avec des distances et durées différentes et que l'on dispose des informations de trajet pour chaque couple de premiers identificateurs présents dans la base de données temporaire.

Il faut remarquer que la construction de cette base de données structurée 4 pourrait être adapté dans le cas de données symétriques, c'est-à-dire si le trajet pour aller de Lᵣ à Lⱼ est le même que le trajet pour aller de Lⱼ à Lᵣ.

Soulignons que cette troisième matrice PxP ne devra être modifiée que lorsque l'ensemble des N points d'intérêt est modifié, ou que la distance ou la durée entre deux lieux géographique change. Elle est indépendante des voyages calculés.

Pour construire un voyage, l'utilisateur va faire appel à une interface utilisateur, qui a notamment pour rôle d'obtenir de l'utilisateur les informations essentielles à la construction d'un voyage adapté à ses attentes. Cette interface est de préférence un site internet destiné au grand public. Bien évidemment, d'autres technologies peuvent être envisagées (interface mobile, ...), à destination du grand public ou de professionnels. A l'aide de cette interface, l'utilisateur va introduire des données d'utilisateur 9 qui se rapportent au voyage à mettre en place. Avant d'obtenir une première proposition de voyage, l'utilisateur devra simplement répondre à quelques questions, ou introduire des données comme la ou les destinations, le ou les logement(s) et la ou les attraction(s) pour lesquel(le)s il souhaite qu'ils fassent partie du voyage. Ces questions posées à l'utilisateur sont bien entendu un choix parmi d'autres.

Par exemple, l'utilisateur pourra entre autres déterminer :
1. la (ou les) région(s) qu'il souhaite visiter ;
2. le point de départ de son voyage. Ce point de départ peut être fixé ou non ;
3. les dates de son voyage. Ces dates peuvent être définies de manière fixe (à savoir une période de voyage précise), ou ces dates peuvent être flexibles (à savoir un nombre de jours de voyage minimum, un nombre de jours de voyage maximum et une période de voyage plus ou moins large);
4. la forme de son voyage :
   - un voyage circulaire, à savoir un voyage commençant et terminant au même endroit,
   - un voyage linéaire, à savoir un voyage ne se finissant pas forcément là ou il a commencé ;
5. si le voyage est linéaire, le point d'arrivée du voyage peut être fixé ou non.

Il va de soi que l'invention n'est pas limitée à l'ensemble de ces critères et qu'ils sont mentionnés à titre d'exemple, mais bien entendu d'autres formes de réalisation peuvent être utilisées.

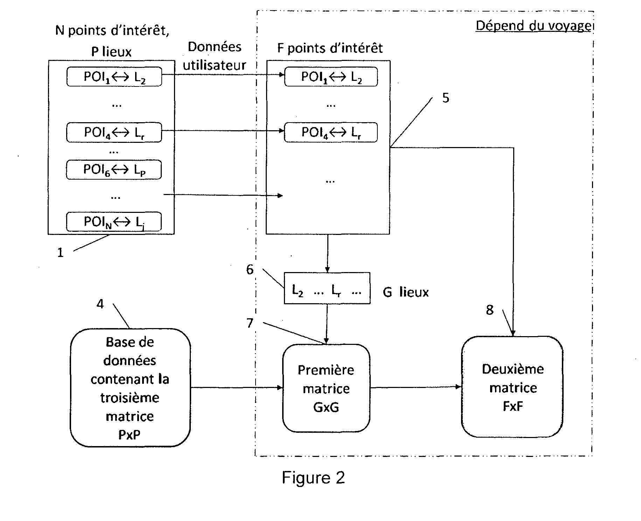

Sur base des réponses ou des données introduites, à savoir les données utilisateur, l'interface utilisateur va les corréler aux points d'intérêt POI stockés dans la première table 1 et va sélectionner et prélever, parmi l'ensemble des N points d'intérêt POI stockés dans la première table, un premier sous-ensemble de F (F ≤ N) points d'intérêt 5 POIᵢ, qui seront utilisés dans la construction d'un voyage adapté aux desiderata de l'utilisateur, comme illustré à la Figure 2. Comme à chacun des points d'intérêt est associé un premier identificateur Lₚ, il sera également sélectionné. Ainsi par exemple les points d'intérêt suivants sont sélectionnés:
- les origines potentielles du voyage, soit une ville (ou village) ou un aéroport fixé par l'utilisateur, soit une partie des villes (ou villages) ou aéroports présents dans la première table 1;
- les activités pouvant être réalisées lors du voyage, à savoir les activités présentes dans la première table 1, se situant dans les régions à visiter et ouvertes aux dates du voyage ;
- les logements où l'on peut séjourner lors du voyage, à savoir les logements présents dans la première table 1, qui se situent dans les régions à visiter et qui sont disponibles aux dates du voyage ;
- les destinations potentielles du voyage, soit une ville (ou village) ou un aéroport fixé par l'utilisateur, soit une partie des villes (ou villages) ou aéroports présents dans la première table 1.

L'ensemble des N points d'intérêt stockés dans la première table peuvent être stockés dans différentes sous-tables. Certaines de ces sous-tables peuvent être des sous-tables internes (locales à l'interface utilisateur) et d'autres des bases de données externes. La consultation des bases de données externes peut par exemple se faire au travers de web services (par exemple en XML).

En particulier, en ce qui concerne le logement, une connexion par web service à une base de données externe d'hôtels gérée et tenue à jour en temps réel permet de connaître et d'exploiter les disponibilités et coûts effectifs des logements possibles. Ceci est utile pour construire des voyages réalistes. En effet, ces informations évoluent de minute en minute.

Un moteur de calcul reçoit les données utilisateur, ainsi que le premier sous-ensemble des F données. Ce moteur se chargera de la construction de la séquence de données.

Ainsi il est transmis au moteur de calcul, entre autres, les informations suivantes :
- les paramètres relatifs aux contraintes et objectifs à prendre en compte dans l'optimisation,
- les informations relatives aux origines,
- les informations relatives aux activités et à leurs heures d'ouverture,
- les informations relatives aux logements et à leurs disponibilités et coûts,
- les informations relatives aux destinations.

Il est évident que certaines de ces informations pourraient être supprimées et d'autres pourraient être ajoutées.

Les paramètres relatifs aux contraintes et objectifs à prendre en compte dans l'optimisation incluent entre autres, par exemple :
- une valeur indiquant si le voyage est circulaire ou linéaire ;
- le nombre minimum de jours dans le voyage ;
- le nombre maximum de jours dans le voyage ;
- la période durant laquelle l'utilisateur veut voyager ;
- le montant à ne pas dépasser pour le coût total du voyage ;
- le coût de transport par kilomètre.

Les informations relatives aux origines incluent, entre autres, par exemple, pour chaque origine :
- un identifiant (ou un ensemble d'identifiants) de cette origine;
- le premier identificateur.

Les informations relatives aux activités incluent, entre autres, par exemple, pour chaque activité :
- un identifiant (ou un ensemble d'identifiants) de cette activité;
- le premier identificateur ;
- ses heures d'ouverture ;
- son coût.

Les informations relatives aux logements incluent, entre autres, par exemple, pour chaque logement :
- un identifiant (ou un ensemble d'identifiants) de ce logement ;
- le premier identificateur ;
- ses disponibilités ;
- ses prix.

Les informations relatives aux destinations incluent, entre autres, par exemple, pour chaque destination :
- un identifiant (ou un ensemble d'identifiants) de cette destination ;
- le premier identificateur.

Il va de soi que l'invention n'est pas limitée à l'ensemble de ces informations et qu'elles sont mentionnés à titre d'exemple, mais bien entendu d'autres formes de réalisation peuvent être utilisées.

Avantageusement, la première table comporte pour un nombre prédéterminé de points d'intérêt un coefficient d'évaluation permettant d'évaluer l'intérêt du point d'intérêt considéré. Ceci permet, lors de la construction de la séquence, d'utiliser le coefficient d'évaluation pour construire ladite séquence et tenir ainsi compte de l'intérêt du point d'intérêt considéré. Ce coefficient d'évaluation peut ainsi indiquer la catégorie d'un hôtel, l'environnement (centre ville, campagne), la présence de sites touristiques, etc. Le coefficient d'évaluation peut également comporter un coût associé au point d'intérêt considéré, comme par exemple le tarif pour passer la nuit. Le coefficient d'évaluation peut également comporter une mesure d'attractivité associée au point d'intérêt considéré. Ainsi, la séquence peut non seulement comprendre ce coefficient d'évaluation, mais il est également possible de l'utiliser lors de la mise en place de la séquence.

Dans le procédé suivant l'invention le moteur de calcul va ensuite structurer les informations liées aux différents trajets entre les F points d'intérêt du premier ensemble qui ont été sélectionnés sur base des données de l'utilisateur, afin de construire une deuxième matrice des trajets 8 entre ces F différents points d'intérêt pris deux à deux.

Pour construire la deuxième matrice ayant une dimension dépendante des caractéristiques du voyage, le moteur de calcul passera en revue l'ensemble des F points d'intérêt du premier sous-ensemble. Le moteur de calcul référenciera leur lieu géographique et ne retiendra que les informations liées aux trajets susceptibles d'être parcourus durant le voyage, ignorant les autres.

Pour rendre le volume de travail à effectuer par le moteur de calcul plus facile et ainsi obtenir une meilleure efficacité, le procédé suivant l'invention comprend la formation, à partir du premier sous-ensemble 5 de F données, d'un deuxième sous-ensemble 6 de G (G ≤ F) premiers identificateurs reprenant les premiers identificateurs Lp associés aux données reprises dans le premier sous-ensemble. Que G ≤ F s'explique par le fait que dans le premier sous-ensemble il peut y avoir des points d'intérêt situés à un même lieu géographique. La formation du deuxième sous-ensemble 6 a également pour but d'utiliser pour les points d'intérêt repris dans le premier sous-ensemble 5, c'est-à-dire ceux qui ont été sélectionné sur base des données d'utilisateur, le premier identificateur qui leur a été associé. Ainsi grâce aux premiers identificateurs repris dans le deuxième sous-ensemble il devient possible d'adresser la base de données 4, qui a été structurée à l'aide des premiers identificateurs comme décrit ci-dessus. A partir des premiers identificateurs Lₚ repris dans le deuxième sous-ensemble, le moteur de calcul va former chaque fois un deuxième couple (((Lₚ)ₖ, (Lₚ)ₘ) ; 1 ≤ k ≤ G ; 1 ≤ m ≤ G ) de premiers identificateurs.

Supposons, comme par exemple repris à la Figure 2, que le premier sous-ensemble des points d'intérêt susceptibles de faire partie du voyage est de taille 5 (F = 5) et que les premiers identificateurs associés à ces points sont L₁ (= 1), L₂ (= 4) et L₄ (= 6) (G = 3) :

| | | | | |
|---|---|---|---|---|
| L₁ | L₂ | L₂ | L₄ | L₁ |
| *(POIᵢ)₁*/*POI₁* | *(POIᵢ)₂*/*POI₃* | *(POIᵢ)₃*/*POI₄* | *(POIᵢ)₄*/*POI₆* | *(POIᵢ)₅*/*POI₈* |

Le moteur de calcul va lire la valeur NumL du troisième identificateur et la valeur MaxLocID du deuxième identificateur dans la base de données 4. Supposons que ces valeurs soient NumL = 5 et MaxLocID = 7. Il sera alors créée une quatrième table ayant un nombre d'emplacements égal au deuxième identificateur MaxLoclD. Chacun des premiers identificateurs repris dans le deuxième sous-ensemble sera ensuite repris dans la quatrième table à l'emplacement dont la position correspond à la valeur numérique attribuée au premier identificateur Lp considéré. Lesdits premiers identificateurs repris dans la quatrième table seront ensuite substitués par leur valeur d'index.

En pratique la quatrième table est d'abord remplie d'une première valeur constante, par exemple -2.

| | | | | | | |
|---|---|---|---|---|---|---|
| -2 | -2 | -2 | -2 | -2 | -2 | -2 |
| *1* | *2* | *3* | *4* | *5* | *6* | *7* |

Ladite première valeur constante sera ensuite remplacée par une deuxième valeur constante -1 à ces emplacements de la quatrième table où doivent être repris les premiers identificateurs du deuxième sous-ensemble. Pour réaliser ce remplacement le moteur de calcul va parcourir le premier sous-ensemble des points d'intérêt et prélever à l'aide de la première table à chaque fois le premier identificateur associé aux points d'intérêt repris dans le premier sous-ensemble. Ensuite pour chaque premier identificateur ainsi prélevé le moteur de calcul va substituer la première valeur constante par la deuxième valeur constante -1 à tous les emplacements dont le numéro d'ordre de l'emplacement correspond à la valeur numérique attribuée aux premiers identificateurs prélevés.

| | | | | | | |
|---|---|---|---|---|---|---|
| -1 | -2 | -2 | -1 | -2 | -1 | -2 |
| *1* | *2* | *3* | *4* | *5* | *6* | *7* |

| | | | | | | |
|---|---|---|---|---|---|---|
| G=3 | | | | | | |

Lors du parcours des premiers identificateurs associés aux points d'intérêt du premier sous-ensemble, le moteur de calcul vérifie également que ceux-ci sont inférieurs ou égaux au deuxième identificateur MaxLocID. Si tel n'est pas le cas un signal d'erreur est produit. En totalisant le nombre de deuxièmes valeurs constantes dans la quatrième table, on obtient le nombre G (G ≤ F) égal au nombre de lieux géographique différents que l'on devra récupérer dans la base de données 4. Ce nombre G forme un quatrième identificateur.

Le moteur de calcul lit ensuite dans la troisième table pour chacun des premiers identificateurs repris dans la quatrième table les valeurs d'index (index-w) associées à ces premiers identificateurs. La quatrième table sera complétée en y introduisant les valeurs d'index des premiers identificateurs repris dans le deuxième sous-ensemble.

Pour réaliser ceci, pour chacun des premiers identificateurs (Lₚ)ₖ (k ; 1 ≤ k ≤ G) lu dans la quatrième table, si à l'emplacement ayant le numéro d'ordre (Lₚ)ₖ la deuxième valeur constante -1 est présente, on la remplace par la valeur d'index attribuée au premier identificateur (Lₚ)ₖ.

| | | | | | | |
|---|---|---|---|---|---|---|
| 1 | -2 | -2 | 2 | -2 | 4 | -2 |
| *1* | *2* | *3* | *4* | *5* | *6* | *7* |

A l'aide de la quatrième table reprenant les valeurs d'index des lieux géographiques différents qui sont susceptibles de faire partie du voyage, le moteur de calcul est en mesure de prélever de la base de données 4 toutes les distances (Δ(dₚ)ₖₘ) et les durées (Δ(tₚ)ₖₘ) pour se rendre du lieu géographique (Lₚ)ₖ au lieu géographique (Lₚ)ₘ ((Lₚ)ₖ, (Lₚ)ₘ ; (1 ≤ k ≤ G ; 1 ≤ m ≤ G ). Après ce prélèvement une première matrice 7 GxG sera construite en mettant en chaque endroit (k,m) la distance (Δ(dₚ)ₖₘ) et la durée (Δ(tₚ)ₖₘ) prélevées dans la base de données 4. Ainsi, cette première matrice contient la distance et la durée entre tous les couples de lieux géographique différents correspondant aux points d'intérêt susceptibles d'être dans le voyage. Les données (POIᵢ) du premier sous-ensemble de données seront ensuite utilisées pour former des troisièmes couples de données ((POIᵢ)_{q}, (POIᵢ)ₛ) (1 ≤ q ≤ F ; 1 ≤ s ≤ F) où q et s représentent une numérotation dans le premier sous-ensemble. Le point d'intérêt (POIᵢ)_{q} représentant celui ayant le numéro d'ordre q dans le premier sous-ensemble. Dans l'exemple repris ci-dessus, (Δd(3,2)) est la distance pour aller du lieu géographique L₄ au lieu géographique L₂.

La première matrice, qui est structurée à l'aide des premiers identificateurs du deuxième sous-ensemble, sera alors utilisée pour former une deuxième matrice FxF. En effet, puisque à chaque premier identificateur est associé au moins un point d'intérêt, il suffit de prélever pour chaque couple de données ((POIᵢ)_{q}, (POIᵢ)ₛ) du premier sous-ensemble à l'aide de leur premiers identificateurs ((Lₚ)ₖ, (Lₚ)ₘ) la distance ((Δdₚ)ₖₘ) et la durée (Δ(tₚ)ₖₘ). La première matrice est alors formée en mettant en chaque endroit (q,s) la distance ((Δdₚ)ₖₘ) et la durée (Δ(tₚ)ₖₘ) qui viennent d'être prélevées.

Ainsi, par exemple, la durée du trajet entre le quatrième point d'intérêt POI₆ et le deuxième point d'intérêt POI₃ dans l'ensemble des points d'intérêt susceptibles de faire partie du voyage est stockée dans la composante (3,2) de la deuxième matrice GxG.

La séquence de données permettant la génération du voyage sera ensuite construite à l'aide de la distance ((Δdₚ)ₖₘ) et de la durée (Δ(tₚ)ₖₘ) présentes dans la deuxième matrice FxF pour chacun des couples ((POIᵢ)_{q}, (POIᵢ)ₛ). Maintenant, le moteur de calcul pourra très rapidement trouver les informations relatives à un trajet à réaliser lors du voyage.

Un voyage est essentiellement caractérisé par sa séquence (ordonnée) de points d'intérêt et éventuellement par d'autres variables nécessaires à l'optimisation. Il doit satisfaire un certain nombre de contraintes et est évalué selon un ou plusieurs objectifs. Clairement, pour caractériser entièrement un voyage, il suffit de connaître la séquence (ordonnée) des points d'intérêt qui le constituent et sont repris dans le premier sous-ensemble, ainsi que les moments auxquels commencent et terminent la visite de ces points d'intérêt. Ainsi, pour chaque voyage construit, on enregistre les éléments suivants qui caractérisent ce voyage, à savoir la séquence des points d'intérêt qui constituent le voyage et le moment du début de la visite à chacun des points d'intérêt, qui constituent ce voyage ainsi que le temps nécessaire pour cette visite.

La première composante dans la séquence des points d'intérêt fait référence au point d'intérêt, appartenant au premier sous-ensemble de données, qui a été choisi comme origine du voyage. Les composantes suivantes contiennent, dans leur ordre d'apparition dans le voyage, les références aux points d'intérêt (activités et/ou logements), appartenant au premier sous-ensemble de données, qui constituent le voyage. La dernière composante dans la séquence des points d'intérêt fait référence au point d'intérêt, appartenant au premier sous-ensemble de données, qui a été choisi comme destination du voyage.

Un voyage doit satisfaire un certain nombre de contraintes. En effet, les paramètres globaux et certaines informations fournies au moteur de calcul (horaires d'ouverture, disponibilité, ...) se traduisent en contraintes que doit respecter chaque voyage. Ainsi par exemple on peut avoir une contrainte liée au budget maximum : la somme des coûts du voyage ne doit pas dépasser le budget maximum fournit par l'utilisateur.

A titre d'exemple on présente maintenant des éléments sur lesquels on peut se baser pour évaluer un voyage. On peut évaluer la qualité d'un voyage selon différents critères (objectifs). Deux objectifs principaux sont, par exemple, pris en compte : minimiser les coûts des différentes composantes du voyage et maximiser l'attractivité (c'est-à-dire l'intérêt) des différentes composantes du voyage. L'attractivité est une mesure de l'intérêt d'un point d'intérêt. Les mesures de compromis définies par l'utilisateur sont utilisées pour définir des pondérations relatives à chacun des objectifs.

Le moteur de calcul construit un voyage adapté aux attentes de l'utilisateur en partant d'un voyage initial simple construit sur base de la séquence de données 10 obtenue comme décrit ci-dessus, puis l'améliore par un processus d'optimisation.

Il faut observer que le mode de raisonnement appliqué par la technologie s'oppose au raisonnement qu'aurait un homme du métier s'il devait construire un voyage par lui-même, ou donc concevoir un système informatique qui permettrait d'automatiser ce processus. En effet, il aurait sans doute tendance à choisir quelques activités et logements qui lui plaisent, puis à essayer de les organiser pour les répartir en différentes journées, afin d'obtenir directement un voyage plus ou moins adapté, qu'il pourrait ensuite essayer d'améliorer en visitant quelques activités supplémentaires, en décidant d'en supprimer d'autres, en remplaçant un logement par un autre, .... le tout par tâtonnements.

Toutefois, le voyage obtenu sera alors fortement conditionné par ses premiers choix. Par ailleurs, ce processus peut difficilement être automatisé. A l'opposé, partir d'un projet de voyage très simple, on laisse plus de libertés pour explorer des pistes plus variées, et la réalisation d'un grand nombre d'améliorations itératives est facilement automatisable. La technologie suivant l'invention évalue en quelques secondes des millions de voyages différents. Un voyageur ne pourrait pas comparer autant de voyages en une vie entière.

Ce voyage 11 est présenté, par exemple jour par jour, à l'utilisateur, accompagné d'informations utiles (descriptions, photos, etc.). L'utilisateur peut également visualiser chaque journée du voyage, ainsi que le voyage complet, sur une carte. Si le voyage proposé ne convient pas parfaitement à l'utilisateur, ce dernier a la possibilité de préciser ou revoir ses souhaits 12 et de construire un nouveau voyage. Ces choix seront pris en compte lors de la construction d'un nouveau voyage, car ils correspondent à des paramètres ou données précises envoyés au moteur de calcul.

Par exemple, avant de construire un nouveau voyage, l'utilisateur peut exprimer ses préférences vis-à vis des activités proposées dans le voyage actuel. Si une activité ne l'intéresse pas, il lui suffira de l'exclure des prochains voyages (activité non envoyée au moteur de calcul). Au contraire, si une activité l'intéresse, il pourra demander qu'elle soit absolument placée dans le prochain voyage. L'utilisateur peut également exclure des prochaines propositions un logement qui ne lui convient pas (logement non envoyé au moteur de calcul). A l'inverse, il peut demander de placer un logement qui lui convient dans les prochaines propositions de voyage. De même, le nombre de fois (nuits) durant lesquelles l'utilisateur souhaite séjourner dans ce logement peut être précisé. L'utilisateur peut indiquer ses centres d'intérêt, ce qui conditionnera la sélection des activités. L'utilisateur a également la possibilité de parcourir les données de la première table correspondant à des activités dans le but d'inclure dans son prochain voyage quelques unes de ces activités. La même chose est possible pour les logements.

D'un point de vue technique, de nombreux tests sont réalisés afin de ne pas permettre à un utilisateur de faire des choix incohérents. Lorsque l'utilisateur a affiné ses demandes, il demande de reconstruire un nouveau voyage. Le système envoie alors les informations mises à jour au moteur de calcul, qui génère un nouveau voyage adapté. Le nouveau voyage est alors proposé à l'utilisateur. Ce voyage pourra être affiné jusqu'à ce que l'utilisateur soit satisfait du voyage proposé.

## Revendications

1. Procédé pour la mise en place à l'aide d'un ordinateur d'une séquence de données permettant la génération d'un voyage, lequel procédé comporte l'usage d'une première table dans laquelle est stocké un premier ensemble de N données, chaque donnée (POIᵢ ; 1 ≤ i ≤ N) identifiant un point d'intérêt pouvant faire partie de voyages, lequel procédé comporte également la réception de données d'utilisateur introduites par un utilisateur et qui se rapportent audit voyage à mettre en place, lesquelles données d'utilisateur sont corrélées aux points d'intérêt afin de prélever dans la première table un premier sous-ensemble de F (F ≤ N) données identifiant des points d'intérêt corrélées aux données d'utilisateur, **caractérisé en ce qu'**à chaque donnée (POIᵢ) dudit premier ensemble de données est associé un premier identificateur (Lₚ ; 1 ≤ p ≤ P ; P ≤ N) identifiant un lieu géographique où est situé le point d'intérêt identifié par la donnée (POIᵢ), lequel procédé comporte également l'usage d'une base de données indiquant entre chaque fois un premier couple ((Lᵣ,Lⱼ) ; 1 ≤ r ≤ P ; 1 ≤ j ≤ P) de lieux géographiques une distance (Δdᵣⱼ) et une durée (Δtᵣⱼ) pour se rendre du lieu géographique Lᵣ au lieu géographique Lⱼ, lequel usage de la base de données est réalisé en formant à partir du premier sous-ensemble de F données un deuxième sous-ensemble de G (G ≤ F, G ≤ P) premiers identificateurs reprenant les premiers identificateurs associés aux données reprises dans le premier sous-ensemble, et en formant chaque fois un deuxième couple (((Lₚ)ₖ, (Lₚ)ₘ) ; 1 ≤ k ≤ G ; 1 ≤ m ≤ G) de premiers identificateurs à l'aide des premiers identificateurs repris dans le deuxième sous-ensemble, lesquels couples ((Lₚ)ₖ, (Lₚ)ₘ) de premiers identificateurs étant alors utilisés pour prélever dans la base de données chaque fois la distance (Δ(dₚ)ₖₘ) et la durée (Δ(tₚ)ₖₘ) pour se rendre du lieu géographique (Lₚ)ₖ au lieu géographique (Lₚ)ₘ, une première matrice GxG étant construite en mettant en chaque endroit (k,m) la distance (Δ(dₚ)ₖₘ) et la durée (Δ(tₚ)ₖₘ) prélevées dans la base de données, les données du premier sous-ensemble de données étant ensuite utilisées pour former des troisièmes couples de données (((POIᵢ)_{q}, (POIᵢ)ₛ) ; 1 ≤ q ≤ F ; 1 ≤ s ≤ F) et pour former une deuxième matrice FxF en prélevant dans la première matrice pour chaque couple de données ((POIᵢ)_{q}, (POIᵢ)ₛ) à l'aide de leur premier identificateur (Lₚ)ₖ, (Lₚ)ₘ associé chaque fois à la donnée (POIᵢ)_{q}, (POIᵢ)ₛ la distance (Δ(dₚ)ₖₘ) et la durée (Δ(tₚ)ₖₘ) et en mettant en chaque endroit (q,s) la distance (Δ(dₚ)ₖₘ) et la durée (Δ(tₚ)ₖₘ) prélevées dans la première matrice, ladite séquence de données étant ensuite construite à l'aide de la distance (Δ(dₚ)ₖₘ) et la durée (Δ(tₚ)ₖₘ) présentes dans la deuxième matrice FxF pour chacun des couples (POIᵢ)_{q}, (POIᵢ)ₛ.

2. Procédé suivant la revendication 1, **caractérisé en ce que** chaque premier identificateur (Lₚ) est formé par une valeur numérique distincte (LocIDₚ), à chacun des premiers identificateurs (Lp) une valeur d'index (index-w) est associée, laquelle valeur d'index indique la position de chaque premier identificateur dans un rangement des premiers identificateurs réalisé sur base de ladite valeur numérique, ladite base de données comprend une troisième matrice qui est structurée et adressée à l'aide de cette valeur d'index et qui contient la distance et la durée de chacun des premiers couples.

3. Procédé suivant la revendication 2, **caractérisé en ce que** sur base des valeurs numériques formant les premiers identificateurs un deuxième identificateur (MaxLocID) est formé indiquant la valeur numérique la plus élevée attribuée à un premier identificateur, une deuxième table comprenant un nombre d'emplacements au moins égal à la valeur numérique dudit deuxième identificateur étant ensuite formée, l'ensemble des premiers identificateurs étant ensuite parcouru et pour chacun des premiers identificateurs il est mis à l'endroit dont la position dans la deuxième table correspond à la valeur numérique attribuée au premier identificateur considéré une valeur prédéterminée, le nombre d'endroits dans la deuxième table où une telle valeur prédéterminée est reprise étant ensuite compté pour former un troisième identificateur (NumL).

4. Procédé suivant la revendication 3, **caractérisé en ce qu'**une troisième table est formée dont le nombre d'emplacements correspond au nombre indiqué par le troisième identificateur, ladite valeur d'index (index-w) étant associée aux premiers identificateurs en plaçant les premiers identificateurs dans la troisième table suivant l'ordre dans lequel ils sont repris dans la deuxième table, la valeur d'index attribuée correspondant à l'ordre de succession suivant lequel les premiers identificateurs sont repris dans la troisième table.

5. Procédé suivant l'une des revendications 3 ou 4, **caractérisé en ce qu'**il est formé une base de données temporaire sur base des premiers identificateurs attribués aux points d'intérêt, ladite base de données temporaire est formée en prenant chaque fois un couple de premiers identificateurs auquel on associe chaque fois la distance et la durée pour se rendre du lieu géographique Lᵣ au lieu géographique Lⱼ repris dans le couple, ladite base de données temporaire étant parcourue lors de la formation de la deuxième table.

6. Procédé suivant la revendication 5, **caractérisé en ce qu'**une vérification de la consistance des données stockées dans la base de données temporaire est effectuée lorsque la base de données temporaire est parcourue.

7. Procédé suivant l'une des revendications 2 à 6, **caractérisé en ce que** pour le deuxième sous-ensemble ladite valeur d'index est également reprise dans ce deuxième sous-ensemble, et **en ce que** lesdits deuxièmes couples sont formés par les valeurs d'index attribuées aux premiers identificateurs formant lesdits deuxièmes couples.

8. Procédé suivant les revendications 3 à 7, **caractérisé en ce qu'**une quatrième table ayant un nombre d'emplacements égal au deuxième identificateur est formée, chacun des premiers identificateurs repris dans le deuxième sous-ensemble étant ensuite repris dans la quatrième table à l'emplacement dont la position correspond à la valeur numérique attribuée au premier identificateur considéré, lesdits premiers identificateurs repris dans la quatrième table étant ensuite substitués par leur valeur d'index.

9. Procédé suivant la revendication 8, **caractérisé en ce que** ladite quatrième table est d'abord remplie d'une première valeur constante (-2), ladite première valeur constante étant remplacée par une deuxième valeur constante (-1) à ces emplacements du quatrième tableau où doivent être repris les premiers identificateurs du deuxième sous-ensemble.

10. Procédé suivant la revendication 9, **caractérisé en ce que** le nombre d'emplacements où ladite deuxième valeur constante est reprise sont totalisés pour former un quatrième identificateur indiquant le nombre G d'éléments du deuxième sous-ensemble.

11. Procédé suivant la revendication 10, **caractérisé en ce que** la quatrième table est complétée en y introduisant les valeurs d'index des premiers identificateurs repris dans le deuxième sous-ensemble.

12. Procédé suivant la revendication 11, **caractérisé en ce qu'**après avoir remplacé la deuxième valeur constante par la valeur d'index, il est vérifié s'il reste des emplacements comprenant la deuxième valeur, et si tel est le cas un signal d'erreur est produit.

13. Procédé suivant l'une des revendications 8 à 12, **caractérisé en ce que** la première matrice est structurée sur base des données reprises dans la quatrième table.

14. Procédé suivant l'une des revendications 1 à 13, **caractérisé en ce qu'**à partir de la séquence de données construite on la fait évoluer en appliquant une méthode d'optimisation combinatoire.

15. Procédé suivant l'une des revendications 1 à 14, **caractérisé en ce que** la base de données comporte un troisième ensemble comprenant des premiers facteurs d'adaptation permettant d'introduire dans ladite séquence une adaptation en fonction du moyen de locomotion utilisé pour parcourir ladite distance.

16. Procédé suivant l'une des revendications 1 à 15, **caractérisé en ce que** la première table comporte pour un nombre prédéterminé de points d'intérêt un coefficient d'évaluation permettant d'évaluer l'intérêt du point d'intérêt considéré, et **en ce que** lors de la construction de la séquence le coefficient d'évaluation est utilisé pour construire ladite séquence.

17. Procédé suivant la revendication 16, **caractérisé en ce que** le coefficient d'évaluation comporte un coût associé au point d'intérêt considéré.

18. Procédé suivant l'une des revendications 16 ou 17, **caractérisé en ce que** le coefficient d'évaluation comporte une mesure d'attractivité associé au point d'intérêt considéré.

19. Procédé pour construire un voyage et le présenter à un utilisateur, lequel procédé comporte la mise en place d'une séquence de données par l'application du procédé suivant l'une des revendications 1 à 18, **caractérisé en ce qu'**à partir de ladite séquence le voyage est construit en utilisant les points d'intérêt repris dans ladite séquence et en les affichant.

20. Procédé suivant la revendication 19, **caractérisé en ce qu'**après avoir affiché ladite séquence et sur base de données d'adaptation introduites par l'utilisateur une séquence modifiée est produite par l'application du procédé suivant l'une des revendications 1 à 18.

21. Procédé suivant l'une des revendications 19 ou 20, **caractérisé en ce que** les données utilisateur comprennent une donnée de compromis permettant de compléter les données utilisateur.

## Patentansprüche

1. Verfahren zum Herstellen einer Datensequenz, die das Erzeugen einer Reise ermöglicht, mit Hilfe eines Computers, wobei das Verfahren die Nutzung einer ersten Tabelle umfasst, in der eine erste Gesamtheit von N Daten gespeichert ist, wobei jedes Datum (POIᵢ; 1 ≤ 1 ≤ N) einen Punkt von Interesse identifiziert, der Teil von Reisen sein kann, wobei das Verfahren auch den Empfang von Benutzerdaten umfasst, die von einem Benutzer eingegeben werden und die sich auf die einzurichtende Reise beziehen, wobei die Benutzerdaten mit den Punkten von Interesse korreliert sind, um in der ersten Tabelle eine erste Untereinheit von F (F ≤ N) Daten zu entnehmen, die Punkte von Interesse identifizieren, die mit den Benutzerdaten korreliert sind, **dadurch gekennzeichnet, dass** jedes Datum (POIᵢ) der ersten Dateneinheit einem ersten Identifikator (Lp; 1 ≤ p ≤ P; P ≤ N) zugeordnet ist, der einen geografischen Ort identifiziert, an dem sich der Punkt von Interesse befindet, der von dem Datum (POIᵢ) identifiziert wurde, wobei das Verfahren auch die Nutzung einer Datenbasis umfasst, die zwischen immer einem ersten Paar (Lᵣ, Lⱼ); 1 ≤ r ≤ P; 1 ≤ j ≤ P) von geografischen Orten eine Distanz (Δdᵣⱼ) und eine Dauer (Δtᵣⱼ) angibt, um sich von dem geografischen Ort Lᵣ zu dem geografischen Ort Lⱼ zu begeben, wobei die Nutzung der Datenbasis erfolgt, indem aus der ersten Untereinheit von F Daten eine zweite Untereinheit von G (G ≤ F, G ≤ P) ersten Identifikatoren gebildet wird, die die ersten Identifikatoren übernehmen, die den Daten zugeordnet sind, die in der ersten Untereinheit übernommen wurden, und indem immer ein zweites Paar (((Lₚ)ₖ, (Lₚ)ₖ; 1 ≤ k ≤ G; 1 ≤ m ≤ G) von ersten Identifikatoren mit Hilfe der ersten Identifikatoren gebildet wird, die in der zweiten Untereinheit übernommen wurden, wobei diese Paare ((Lₚ)ₖ, (Lₚ)ₘ) von ersten Identifikatoren nun verwendet werden, um aus der Datenbasis immer die Distanz (Δ(dₚ)ₖₘ) und die Dauer (Δ(tₚ)ₖₘ) zu entnehmen, um sich von dem geografischen Ort (Lₚ)ₖ zu dem geografischen Ort (Lₚ)ₘ zu begeben, wobei eine erste Matrix GxG gebildet wird, wobei an jeder Stelle (k, m) die Distanz (Δ(dₚ)ₖₘ) und die Dauer (Δ(tₚ)ₖₘ), die aus der Datenbasis entnommen wurden, eingesetzt werden, wobei die Daten der ersten Datenuntereinheit sodann verwendet werden, um dritte Datenpaare (((POIᵢ)_{q}, (POIᵢ)ₛ); 1 ≤ q ≤ F; 1 ≤ s ≤ F) zu bilden und um eine zweite Matrix F zu bilden, wobei aus der ersten Matrix für jedes Datenpaar ((POIᵢ)_{q}, (POIᵢ)ₛ) mit Hilfe ihres ersten Identifikators (Lₚ)ₖ, (Lₚ)ₘ, der immer dem Datum ((POIᵢ)_{q}, (POIᵢ)ₛ) zugeordnet ist, die Distanz (Δ(dₚ)ₖₘ) und die Dauer (Δ(tₚ)ₖₘ) entnommen werden, wobei an jeder Stelle (q, s) die Distanz (Δ(dₚ)ₖₘ) und die Dauer (Δ(tₚ)ₖₘ) eingesetzt werden, die aus der ersten Matrix entnommen wurden, wobei die Datensequenz sodann mit Hilfe der Distanz (Δ(dₚ)ₖₘ) und der Dauer (Δ(tₚ)ₖₘ) gebildet wird, die in der zweiten Matrix FxF für jedes der Paare ((POIᵢ)_{q}, (POIᵢ)ₛ) vorhanden sind.

2. Verfahren nach Anspruch 1, **dadurch gekennzeichnet, dass** jeder erste Identifikator (Lp) von einem unterschiedlichen digitalen Wert (LocIDₚ) gebildet ist, dass jedem der ersten Identifikatoren (Lp) ein Indexwert (index-w) zugeordnet ist, welcher Indexwert die Position jedes ersten Identifkators in einer Reihung der ersten Identifikatoren, die auf Basis des digitalen Werts erstellt wurde, angibt, wobei die Datenbasis eine dritte Matrix umfasst, die mit Hilfe dieses Indexwertes strukturiert und adressiert wird und die Distanz und die Dauer jedes der ersten Paare enthält.

3. Verfahren nach Anspruch 2, **dadurch gekennzeichnet, dass** auf Basis der digitalen Werte, die die ersten Identifikatoren bilden, ein zweiter Identifikator (MaxLocID) gebildet wird, der den höchsten digitalen Wert angibt, der einem ersten Identifikator zugeteilt wird, wobei eine zweite Tabelle, die eine Anzahl von Stellen mindestens gleich dem digitalen Wert des zweiten Identifikators umfasst, dann gebildet wird, wobei die Gesamtheit der ersten Identifikatoren dann durchlaufen wird und für jeden der ersten Identifikatoren an den Platz, dessen Position in der zweiten Tabelle dem digitalen Wert entspricht, der dem betreffenden ersten Identifikator zugeteilt ist, ein vorbestimmter Wert eingesetzt wird, wobei die Anzahl von Plätzen in der zweiten Tabelle, in der ein solcher vorbestimmter Wert übernommen wird, dann gezählt wird, um einen dritten Identifikator (NumL) zu bilden.

4. Verfahren nach Anspruch 3, **dadurch gekennzeichnet, dass** eine dritte Tabelle gebildet wird, deren Anzahl von Plätzen der vom dritten Identifikator angegebenen Anzahl entspricht, wobei der Indexwert (index-w) den ersten Identifikatoren zugeordnet wird, wobei die ersten Identifikatoren in der dritten Tabelle in der Reihenfolge angeordnet werden, in der sie in der zweiten Tabelle übernommen werden, wobei der zugeteilte Indexwert der Aufeinanderfolge entspricht, in der die ersten Identifikatoren in der dritten Tabelle übernommen werden.

5. Verfahren nach einem der Ansprüche 3 oder 4, **dadurch gekennzeichnet, dass** eine vorübergehende Datenbasis auf Grundlage der ersten Identifikatoren, die den Punkten von Interesse zugeordnet sind, gebildet wird, wobei die vorübergehende Datenbasis gebildet wird, wobei immer ein Paar von ersten Identifikatoren herangezogen wird, denen immer die Distanz und die Dauer, um sich vom geografischen Ort Lᵣ zum geografischen Ort Lⱼ, der in dem Paar übernommen wird, zu begeben, zugeordnet wird, wobei die vorübergehende Datenbasis bei der Bildung der zweiten Tabelle durchlaufen wird.

6. Verfahren nach Anspruch 5, **dadurch gekennzeichnet, dass** eine Überprüfung der Konsistenz der in der vorübergehenden Datenbasis gespeicherten Daten durchgeführt wird, wenn die vorübergehende Datenbasis durchlaufen wird.

7. Verfahren nach einem der Ansprüche 2 bis 6, **dadurch gekennzeichnet, dass** für die zweite Untereinheit der Indexwert ebenfalls in dieser zweiten Untereinheit übernommen wird, und dass die zweiten Paare von den Indexwerten gebildet werden, die den ersten Identifikatoren, die die zweiten Paare bilden, zugeordnet wurden.

8. Verfahren nach den Ansprüchen 3 bis 7, **dadurch gekennzeichnet, dass** eine vierte Tabelle, die eine Anzahl von Plätzen gleich dem zweiten Identifikator hat, gebildet wird, wobei jeder der ersten Identifikatoren, der in der zweiten Untereinheit übernommen wird, dann in der vierten Tabelle an der Stelle übernommen wird, deren Position dem digitalen Wert entspricht, der dem ersten betreffenden Identifikator zugeordnet wird, wobei die ersten Identifikatoren, die in der vierten Tabelle übernommen werden, dann durch ihren Indexwert substituiert werden.

9. Verfahren nach Anspruch 8, **dadurch gekennzeichnet, dass** die vierte Tabelle zuerst mit einem ersten konstanten Wert (-2) gefüllt wird, wobei der ersten konstante Wert durch einen zweiten konstanten Wert (-1) an diesen Stellen der vierten Tabelle ersetzt wird, an denen die ersten Identifikatoren der zweiten Untereinheit übernommen werden sollen.

10. Verfahren nach Anspruch 9, **dadurch gekennzeichnet, dass** die Anzahl von Plätzen, an denen der zweite konstante Wert übernommen wird, summiert werden, um einen vierten Identifikator zu bilden, der die Anzahl G von Elementen der zweiten Untereinheit angibt.

11. Verfahren nach Anspruch 10, **dadurch gekennzeichnet, dass** die vierte Tabelle ergänzt wird, wobei in sie die Indexwerte der ersten Identifkatoren, die in der zweiten Untereinheit übernommen wurden, eingefügt werden.

12. Verfahren nach Anspruch 11, **dadurch gekennzeichnet, dass**, nachdem der zweite konstante Wert durch den Indexwert ersetzt wurde, überprüft wird, ob Plätze bleiben, die den zweiten Wert umfassen, und falls dies der Fall ist, wird ein Fehlersignal erzeugt.

13. Verfahren nach einem der Ansprüche 8 bis 12, **dadurch gekennzeichnet, dass** die erste Matrix auf Basis der in der vierten Tabelle übernommenen Daten strukturiert wird.

14. Verfahren nach einem der Ansprüche 1 bis 13, **dadurch gekennzeichnet, dass** aus der erzeugten Datensequenz diese weiterentwickelt wird, wobei eine kombinatorische Optimierungsmethode angewandt wird.

15. Verfahren nach einem der Ansprüche 1 bis 14, **dadurch gekennzeichnet, dass** die Datenbasis eine dritte Einheit aufweist, umfassend erste Anpassungsfaktoren, die es ermöglichen, in die Sequenz eine Anpassung in Abhängigkeit von dem für das Durchlaufen der Distanz verwendeten Fortbewegungsmittel einzuführen.

16. Verfahren nach einem der Ansprüche 1 bis 15, **dadurch gekennzeichnet, dass** die erste Tabelle für eine vorbestimmte Anzahl von Punkten von Interesse einen Bewertungskoeffizienten umfasst, der es ermöglicht, das Interesse des betreffenden Punktes von Interesse zu bewerten, und dass bei der Herstellung der Sequenz der Bewertungskoeffizient verwendet wird, um die Sequenz herzustellen.

17. Verfahren nach Anspruch 10, **dadurch gekennzeichnet, dass** der Bewertungskoeffizient Kosten umfasst, die dem betreffenden Punkt von Interesse zugeordnet sind.

18. Verfahren nach einem der Ansprüche 16 oder 17, **dadurch gekennzeichnet, dass** der Bewertungskoeffizient eine Attraktivitätsmessung in Verbindung mit dem betreffenden Punkt von Interesse umfasst.

19. Verfahren zur Erzeugung einer Reise und deren Präsentation gegenüber einem Benutzer, wobei das Verfahren die Einrichtung einer Datensequenz durch Anwendung des Verfahrens nach einem der Ansprüche 1 bis 18 umfasst, **dadurch gekennzeichnet, dass** aus der Sequenz die Reise erzeugt wird, wobei die in der Sequenz übernommenen Punkte von Interesse verwendet und angezeigt werden.

20. Verfahren nach Anspruch 19, **dadurch gekennzeichnet, dass** nach dem Anzeigen der Sequenz und auf Basis von Anpassungsdaten, die vom Benutzer eingegeben werden, eine modifizierte Sequenz durch Anwendung des Verfahrens nach einem der Ansprüche 1 bis 18 erzeugt wird.

21. Verfahren nach einem der Ansprüche 19 oder 20, **dadurch gekennzeichnet, dass** die Benutzerdaten ein Kompromissdatum umfassen, das es ermöglicht, die Benutzerdaten zu vervollständigen.

## Claims

1. Method for establishing, by means of a computer, a sequence of data for generating a trip, the said method comprising the use of a first table in which a first set of N data is stored, each data item (POIᵢ; 1 ≤ i ≤ N) identifying a point of interest that may form part of journeys, the said method also comprising the reception of user data introduced by a user and that relate to the trip to be established, the said user data being correlated with the points of interest in order to take from the first table a first subset of F (F ≤ N) data identifying points of interest correlated with the user data, **characterized in that**, with each data item (POIᵢ) of the said first set of data, there is associated a first identifier (Lₚ; 1 ≤ p ≤ P; P ≤ N) identifying a geographical location where the point of interest identified by the data item (POIᵢ) is situated, the said method also comprising the use of a database indicating between on each occasion a first pair ((Lᵣ,Lⱼ); 1 ≤ r ≤ P; 1 ≤ j ≤ P) of geographical locations, a distance (Δdᵣⱼ and a time (Δtᵣⱼ) for going from geographical location Lᵣ to geographical location Lⱼ, the said use of the database being made by forming, from the first subset of F data, a second subset of G (G ≤ F, G ≤ P) first identifiers repeating the first identifiers associated with the data set out in the first subset, and on each occasion forming a second pair (((Lₚ)ₖ, (Lₚ)ₘ; 1 ≤ k ≤ G; 1 ≤ m ≤ G) of first identifiers by means of the first identifiers set out in the second subset, the said pairs ((Lₚ)ₖ, (Lₚ)ₘ) of first identifiers then being used to take from the database on each occasion the distance (Δ(dₚ)ₖₘ) and the time (Δ(tₚ)ₖₘ) for going from the geographical location (Lₚ)ₖ to the geographical location (Lₚ)ₘ, a first matrix GxG being constructed by putting at each point (k,m) the distance (Δ(dₚ)ₖₘ) and the time (Δ(tₚ)ₖₘ) taken from the database, the data of the first subset of data next being used to form third pairs of data (((POIᵢ)_{q}, (POIᵢ)ₛ (1 ≤ q ≤ F; 1 ≤ s ≤ F) and to form a second matrix FxF by taking, from the first matrix for each pair of data ((POIᵢ)_{q}, (POIᵢ)ₛ) by means of their first identifier (Lₚ)ₖ, (Lₚ)ₘ associated on each occasion with the data (POIᵢ)_{q}, (POIᵢ)ₛ, the distance (Δ(dₚ)ₖₘ) and the time (Δ(tₚ)ₖₘ) and putting at each point (q,s) the distance (Δ(dₚ)ₖₘ) and the time (Δ(tₚ)ₖₘ) taken from the first matrix, the said sequence of data next being constructed by means of the distance (Δ(dₚ)ₖₘ) and the time (Δ(tₚ)ₖₘ) present in the second matrix FxF for each of the pairs (POIᵢ)_{q}, (POIᵢ)ₛ.

2. Method according to claim 1, **characterized in that** each first identifier (Lp) is formed by a distinct numerical value (LocIDₚ), an index value (index-w) is associated with each of the first identifiers (Lₚ), the said index value indicating the position of each first identifier in an arrangement of the first identifiers carried out on the basis of the said numerical value, the said database comprising a third matrix that is structured and addressed by means of this index value and contains the distance and time of each of the first pairs.

3. Method according to claim 2, **characterized in that**, on the basis of the numerical values forming the first identifiers, a second identifier (MaxLocID) is formed indicating the highest numerical value attributed to a first identifier, a second table comprising a number of places at least equal to the numerical value of the said second identifier then being formed, all the first identifiers then being run through and, for each of the first identifiers, a predetermined value is put at the place the position of which in the second table corresponds to the numerical value attributed to the first identifier considered, the number of places in the second table where such a predetermined value is set out then being counted in order to form a third identifier (NumL).

4. Method according to claim 3, **characterized in that** a third table is formed, in which the number of places corresponds to the number indicated by the third identifier, the said index value (index-w) being associated with the first identifiers by placing the first identifiers in the third table in the order in which they are set out in the second table, the index value attributed corresponding to the order of succession according to which the first identifiers are set out in the third table.

5. Method according to one of claims 3 or 4, **characterized in that** a temporary database is formed on the basis of the first identifiers attributed to the points of interest, the said temporary database is formed by taking on each occasion a pair of first identifiers with which on each occasion there are associated the distance and the time taken to go from the geographical location Lᵣ to the geographical location Lⱼ set out in the pair, the said temporary database being run through when the second table is formed.

6. Method according to claim 5, **characterized in that** a check on the consistency of the data stored in the temporary database is performed when the temporary database is run through.

7. Method according to one of claims 2 to 6, **characterized in that**, for the second subset, the said index value is also set out in this second subset, and **in that** the said second pairs are formed by the index values attributed to the first identifiers forming the said second pairs.

8. Method according to claims 3 to 6 and 7, **characterized in that** a fourth table having a number of places equal to the second identifier is formed, each of the first identifiers set out in the second subset then being set out in the fourth table at the place the position of which corresponds to the numerical value attributed to the first indicator considered, the said first identifiers set out in the fourth table then being replaced by their index value.

9. Method according to claim 8, **characterized in that** the said fourth table is first of all filled with a first constant value (-2), the said first constant value being replaced by a second constant value (-1) at these places in the fourth table where the first identifiers of the second subset should be entered.

10. Method according to claim 9, characterized that the number of places where the said second constant value is set out are totaled in order to form a fourth identifier indicating the number G of elements of the second subset.

11. Method according to claim 10, **characterized in that** fourth table is completed by introducing therein the index values of the first identifiers set out in the second subset.

12. Method according to claim 11, **characterized in that**, after having replaced the second constant value with the index value, it is checked whether there remain places comprising the second value and, if such is the case, an error signal is produced.

13. Method according to one of claims 8 to 12, **characterized in that** the first matrix is structured on the basis of the data set out in the fourth table.

14. Method according to one of claims 1 to 13, **characterized in that**, from the sequence of data constructed, it is changed by applying a combinatory optimization method.

15. Method according to one of claims 1 to 14, **characterized in that** the database comprises a third set comprising first adaptation factors for introducing into the said sequence an adaptation according to the locomotion means used for travelling the said distance.

16. Method according to one of claims 1 to 15, **characterized in that** the first table comprises, for a predetermined number of points of interest, an evaluation coefficient for evaluating the interest of the point of interest in question, and **in that**, when the sequence is constructed, the evaluation coefficient is used to construct the said sequence.

17. Method according to claim 16, **characterized in that** the evaluation coefficient comprises a cost associated with the point of interest in question.

18. Method according to one of claims 16 or 17, **characterized in that** the evaluation coefficient comprises a measurement of attractiveness associated with the point of interest in question.

19. Method for constructing a trip and presenting it to a user, the said method comprising the establishment of a data sequence by applying the method according to one of claims 1 to 18, **characterized in that**, from the said sequence, the trip is constructed using the points of interest set out in the said sequence and displaying them.

20. Method according to claim 19, **characterized in that**, after having displayed the said sequence and on the basis of adaptation data introduced by the user, a modified sequence is produced by applying the method according to one of claims 1 to 18.

21. Method according to one of claims 19 or 20, **characterized in that** the user data comprises a compromise data item for supplementing the user data.
